# EUROPÄISCHE PATENTSCHRIFT

(11) **EP 2 547 808 B1**
(45) Veröffentlichungstag und Bekanntmachung des Hinweises auf die Patenterteilung: **21.01.2015**
(21) Anmeldenummer: 11712168.1
(22) Anmeldetag: 15.03.2011
(51) Int. Cl.: C23C 26/00, C23C 22/00, C23C 22/02, C23C 22/05, C23C 22/76, C23C 22/77, C23C 22/83

(54) **VERFAHREN ZUR HERSTELLUNG EINES BESCHICHTETEN METALLBANDES**
PROCESS FOR PRODUCING A COATED METAL STRIP
PROCÉDÉ DE FABRICATION D'UNE BANDE MÉTALLIQUE REVÊTUE

(30) Priorität: 17.03.2010 DE 102010011754
(43) Veröffentlichungstag der Anmeldung: 23.01.2013
(73) Patentinhaber: Bilstein GmbH & Co. KG, 58119 Hagen (DE); NANO-X GmbH, 66130 Saarbrücken (DE)
(72) Erfinder: KRECH, Dieter, 58119 Hagen (DE); ZWICKEL, Gerald, 35216 Biedenkopf (DE); SEPEUR, Stefan, 66787 Wadgassen (DE); GOEDICKE, Stefan, 66540 Neunkirchen (DE)
(74) Vertreter: Kesselhut, Wolf
(86) Internationale Anmeldenummer: PCT/EP2011/001270
(87) Internationale Veröffentlichungsnummer: WO 2011/113575

(56) Entgegenhaltungen:
- EP-A1- 1 837 091
- WO-A1-02/31063
- DE-A1-102004 049 413
- DE-A1-102007 038 214
- DE-A1-102008 020 216
- DE-A1-102008 051 883

## Beschreibung

Die Erfindung betrifft ein Verfahren zur Herstellung eines beschichteten Metallbands mit den Merkmalen gemäß Anspruch 1.

Die Notwendigkeit einer stetigen Verfahrens-, Eigenschafts- und Kostenoptimierung bei Stahlprodukten, beispielsweise für den Fahrzeugbau, hat zu einer umfassenden Entwicklung innovativer Oberflächenveredelungen für unlegierte, insbesondere geformte Flachstahlprodukte geführt. Dabei liegt ein wichtiger Entwicklungsschwerpunkt im Korrosionsschutz, wobei im zunehmenden Maße auch Aspekte einer steigenden Umweltverträglichkeit und eines sparsamen Ressourceneinsatzes der aufzubringenden Oberflächenschichten Bedeutung erlangen. Verbreitet gelangen für die Erzeugung von derartigen, insbesondere metallischen oder organischen Oberflächenbeschichtungen Schmelztauchverfahren, elektrolytische galvanische Abscheidungen oder organische Beschichtungsverfahren zum Einsatz.

Neben der Korrosionsbeständigkeit werden insbesondere für nachfolgende Umformprozesse auch eine gute Haftung, Kratzfestigkeit und Verschleißfestigkeit gefordert. Hinzu kommt in vielen Anwendungen auch das dekorative Aussehen des Produkts, beispielsweise die gezielte Farbgebung der Oberflächen.

Verbreitete Anwendungsbeispiele sind wenigstens zum Teil sichtbare Innenbauteile einer Autokarosserie, wie Sitzseiten, Sitzlehnenteile, Sitzschienen, Sicherheitsgurthöhenversteller oder Gehäusewinkel für einen Sicherheitsgurt. Im konkreten Beispiel der Herstellung und Formgebung einer Sitzschiene wird ein hochfestes Flachstahlprodukt, vorzugsweise ein Kaltband, eingesetzt, welches über einen mehrstufigen Umformprozess wie Stanzen, Biegen oder Profilieren zu einer Sitzschiene geformt wird. Das erhaltene Bauteil wird zwecks Korrosionsschutzes aber auch aus dekorativen beziehungsweise optischen Gründen in einer nachfolgenden Behandlung mit einer Beschichtung versehen. Typischerweise erfolgt die Beschichtung mittels einer kathodischen Tauchlackierung (KTL) mit den einzelnen Prozessschritten Entfetten, Spülen, Phosphatieren, Spülen und Trocknen. In nachteiliger Konsequenz ist bei dieser Vorgehensweise ein zusätzlicher Prozess erforderlich.

Auch ist es bereits bekannt, während der Halbzeugherstellung oder eines der Halbzeugherstellung zugeordneten Verfahrens Bandstahl insbesondere zum Zweck des Korrosionsschutzes mit nichtmetallischen Überzügen zu versehen, konkret zu lackieren oder mit Kunststoff zu beschichten. Im Dokument DE 1 621 947 ist beschrieben, dass das Überzugsmaterial in flüssiger Konsistenz auf den von einem Coil abgewickelten Bandstahl aufgetragen und anschließend als auf dem Walzmaterial befindlicher Überzug bei der nach dem Auswalzen erforderlichen Entspannungsglühung getrocknet und gegebenenfalls eingebrannt wird. Die Temperatur für die Entspannungsglühung liegt im Bereich von circa 350 bis 650 Grad Celsius, wobei die konkrete Wahl der Glühtemperatur berücksichtigt, welche Temperatur das Beschichtungsmaterial allenfalls verträgt. Der auf diese Weise beschichtete Bandstahl wird anschließend wieder zu einem Coil aufgewickelt.

Die in diesem Dokument DE 1 621 947 beschriebene Vorgehensweise unterwirft die aufzubringende Beschichtung einer gegenüber der geläufigen Verarbeitung deutlich erhöhten Temperatur, so dass dieses Verfahren nicht für Substanzen geeignet ist, welche durch diese Temperaturen negativ beeinflusst, beispielsweise zersetzt oder in einen ungewünschten Zustand umgewandelt werden.

Weiterhin ist es aus der nicht vorveröffentlichten WO 2010/043220 A1 bekannt, eine metallische Oberfläche mit einer verformbaren Korrosionsschutzschicht zu beschichten, die metallische Magnesium-, Zink-, Aluminium-, oder Titanpartikel enthält, welche mit mindesten einer Metallverbindung versetzt werden, wobei es aufgrund einer Reaktion zwischen den Metallpartikeln und der Metallverbindung zu oberflächenmodifizierten Metallpartikeln kommt, die bei einer Temperatur bis zu 500 °C verfestigt werden. Die Schrift gibt keinen Hinweis darauf, die Korrosionsschutzschicht als wässrige Lösung auf ein durch Kaltwalzen und Rekristallisationsglühen erhaltenes hochfestes Kaltband aufzubringen, welches vor dem Aufbringen der Korrosionsschutzschicht von einem Coil abgerollt und nach dem Aufbringen und Trocknen der Korrosionsschutzschicht wieder zu einem Coil aufgerollt wird.

Die DE 10 2004 049 413A1 beschreibt ein Verfahren zur Beschichtung von metallischen Oberflächen, bei dem mindestens eine Schicht einer Zusammensetzung auf die Oberfläche aufgebracht wird, welche Hydrolysate/ Kondensate mindestens eines Silans oder ein Silikonharzbindemittel sowie gegebenenfalls ein geeignetes Lösungsmittel umfasst. Das Verfahren zeichnet sich dadurch aus, dass die Zusammensetzung weiterhin mindestens einen metallischen Füllstoff enthält und die Beschichtung nach dem Aufbringen getrocknet und/oder ausgehärtet wird. Im Anschluss daran wird das mit der Beschichtung versehene Substrat in mindestens einem Arbeitsschritt einer Kaltumformung unterzogen, wobei wenigstens ein Kaltumformungsschritt vorgesehen ist, bevor ein Warmumformprozess erfolgt. Die Schrift gibt einen Hinweis darauf, ein Halbzeugband vor dem Beschichten kaltzuwalzen, abzukühlen und rekristallisationszuglühen.

Die DE 10 2007 038 214A1 beschreibt ein ähnliches Verfahren, bei welchem ein Kaltband vor dem Kaltwalzen und Glühen in Teile geschnitten wird, die anschließend zu Karosserieteilen verarbeitet werden. Da die Handhabung von einzelnen Teilen gegenüber der Handhabung von Coils aufwendiger ist, ist der Schrift kein Hinweis darauf zu entnehmen, dass die erzeugten Teile auch nach der Behandlung einen hohen Umformgrad besitzen.

Weiterhin beschreibt die EP 1 837 091A1 ein Verfahren zur Herstellung einer beschichteten Aluminiumfolie, bei welchem die Aluminiumfolie aus einem Warmband oder Giesband aus Aluminium oder einer Aluminiumlegierung durch Kaltwalzen mit oder ohne Zwischenglühung hergestellt und anschließend zu einem Coil aufgehaspelt wird. Vor dem Aufhaspeln erfolgt ein ein- oder zweiseitiges Beschichten der Aluminiumfolie mit mindestens einer funktionalen Beschichtung, bevor die Aluminiumfolie einer optionalen Glühung unterzogen wird. Die Schrift gibt keinen Hinweis auf eine Beschichtung mit metallischen Partikeln.

Auch ist es bereits bekannt, während der Halbzeugherstellung oder eines der Halbzeugherstellung zugeordneten Verfahrens Bandstahl insbesondere zum Zweck des Korrosionsschutzes mit nichtmetallischen Überzügen zu versehen, konkret zu lackieren oder mit Kunststoff zu beschichten. Im Dokument DE 1 621 947 ist beschrieben, dass das Überzugsmaterial in flüssiger Konsistenz auf den von einem Coil abgewickelten Bandstahl aufgetragen und anschließend als auf dem Walzmaterial befindlicher Überzug bei der nach dem Auswalzen erforderlichen Entspannungsglühung getrocknet und gegebenenfalls eingebrannt wird. Die Temperatur für die Entspannungsglühung liegt im Bereich von circa 350 bis 650 Grad Celsius, wobei die konkrete Wahl der Glühtemperatur berücksichtigt, welche Temperatur das Beschichtungsmaterial allenfalls verträgt. Der auf diese Weise beschichtete Bandstahl wird anschließend wieder zu einem Coil aufgewickelt.

Die in diesem Dokument DE 1 621 947 beschriebene Vorgehensweise unterwirft die aufzubringende Beschichtung einer gegenüber der geläufigen Verarbeitung deutlich erhöhten Temperatur, so dass dieses Verfahren nicht für Substanzen geeignet ist, welche durch diese Temperaturen negativ beeinflusst, beispielsweise zersetzt oder in einen ungewünschten Zustand umgewandelt werden.

Weiterhin ist es aus der nicht vorveröffentlichten WO 2010/043220 A1 bekannt, eine metallische Oberfläche mit einer verformbaren Korrosionsschutzschicht zu beschichten, die metallische Magnesium-, Zink-, Aluminium-, oder Titanpartikel enthält, welche mit mindesten einer Metallverbindung versetzt werden, wobei es aufgrund einer Reaktion zwischen den Metallpartikeln und der Metallverbindung zu oberflächenmodifizierten Metallpartikeln kommt, die bei einer Temperatur bis zu 500 °C verfestigt werden. Die Schrift gibt keinen Hinweis darauf, die Korrosionsschutzschicht als wässrige Lösung auf ein durch Kaltwalzen und Rekristallisationsglühen erhaltenes hochfestes Kaltband aufzubringen, welches vor dem Aufbringen der Korrosionsschutzschicht von einem Coil abgerollt und nach dem Aufbringen und Trocknen der Korrosionsschutzschicht wieder zu einem Coil aufgerollt wird.

Aufgabe der vorliegenden Erfindung ist es, eine verformbare metallische Korrosionsschutzschicht auf ein hochfestes, durch Kaltwalzen, Abkühlen und Rekristallisationsglühen erhaltenes Kaltband aufzubringen, welches anschließend ohne einen Verlust an Festigkeit zusammen mit der aufgebrachten Korrosionsschutzschicht mit hohen Umformgraden in eine gewünschte räumlich Form umformbar ist.

Diese Aufgabe wird erfindungsgemäß durch ein Verfahren zur Herstellung eines beschichteten Metallbands mit den Merkmalen gemäß Anspruch 1 gelöst. Vorteilhafte Weiterbildungen der Erfindung sind in den abhängigen Ansprüchen charakterisiert.

Gemäß der Erfindung zeichnet sich ein Verfahren zur Herstellung eines beschichteten Metallbandes aus einem Halbzeugband, in welchem das Halbzeugband von einem Coil abgehaspelt, danach auf das Halbzeugband eine Korrosionsschutzschicht aufgebracht und danach das beschichtete Halbzeugband zu einem Coil aufgehaspelt wird, dadurch aus, dass das Halbzeugband (12) ein durch Kaltwalzen, Abkühlen und Rekristallisationsglühen erhaltenes Kaltband ist, auf das ein Medium mit metallischen Partikeln zur Bildung der Korrosionsschutzschicht aufgebracht wird. Das Medium ist eine nasschemische Lösung, die durch Sprühen, Tauchen, Spritzen, Fluten oder Walzen aufgebracht wird. Die Korrosionsschutzschicht wird nach dem Auftragen des Mediums und vor dem Aufhaspeln auf dem Kaltband durch Wärmezufuhr bei einer Temperatur getrocknet, die unterhalb der Rekristallisationsglühtemperatur des Kaltbandes liegt.

Das Coil kann auch als Rolle bezeichnet werden. Die Partikel können insbesondere eine Größe unter 1 mm, bevorzugt unter 1 µm aufweisen. Die Beschichtung kann insbesondere einseitig oder partiell sein. Bei der Aufbringung ist das Medium insbesondere fluid, bevorzugt flüssig. Das aufgebrachte Medium trocknet und bildet eine fest haftende und duktile Schicht aus, insbesondere bevor das beschichtete Halbzeugband wieder aufgehaspelt wird. Der Korrosionsschutz ist insbesondere ein kathodischer Korrosionsschutz und/oder ein aktiver Korrosionsschutz. Auf diese Weise werden im Vergleich zur geläufigen Vorgehensweise zusätzliche, diskontinuierlich erfolgende Prozessschritte, wie insbesondere eine Nachbearbeitung, eingespart, wobei gleichzeitig dieselbe oder sogar eine verbesserte Korrosionsschutzwirkung erzielt wird. Kostenintensive und energetisch aufwändige off-line Prozesse, beispielsweise eine Schmelztauchveredelung oder eine energieintensive Elektrolyse mit verbundener teurer Entsorgung chemischer, möglicherweise für Mensch und Umwelt toxischer Abfälle (wie Elektrolysebäder, Zink-Schmelzbäder, Spülwässern, Nachbehandlungsflüssigkeiten), können substituiert werden. Der Energieeinsatz ist reduziert, eine günstigere Energiebilanz wird erreicht. Nach einer Längsteilung kann das erfindungsgemäß erhaltene beschichtete Metallband zum Kunden verbracht werden, der insbesondere eine dreidimensionale Umformung, bei der die Beschichtung unbeschädigt bleibt, vornehmen kann.

Bei gleichbleibenden Anforderungen an den Korrosionsschutz ergeben sich erhebliche, bis zu 80 % betragende Reduzierungen der Schichtdicken und damit deutlich verbesserte Eigenschaften für die Weiterverarbeitung, wie die Schweißeignung, die Lötverträglichkeit und die Klebeverträglichkeit. Der Materialeinsatz für den Korrosionsschutz wird um bis zu 80 % reduziert, so dass sich geringere Kosten und Gewichtsstrukturen für die aus dem beschichteten Metallband gefertigten Bauteile ergeben.

Der Werkstoff des Halbzeugbandes bzw. Kaltbandes, ist bevorzugt ein hochfester Stahl, beispielsweise ein Mangan-Bor-Stahl.

Das Medium ist eine nasschemische Lösung, insbesondere eine wässrige oder organische Lösung. Die metallischen Partikel können in der naßchemischen Lösung in einer Suspension vorliegen, geliert oder dispergiert sein. Neben den metallischen Partikeln kann das Medium auch eine farbige Pigmentierung, insbesondere Nanopigmentierung umfassen, so dass neben dem Korrosionsschutz auch eine dekorative und/oder funktionale Farbgebung oder Farbgestaltung des Halbzeugbandes erfolgt.

Im erfindungsgemäßen Verfahren kann die Auftragung durch Sprühen, Tauchen, Spritzen, Fluten oder Walzen erfolgt. Das Sprühen ist als Auftragungsvorgang besonders bevorzugt, da eine präzise Zufuhr, insbesondere bei gesteuerter oder geregelter Dosierung, erfolgen kann. Eine feine Konfektionierung ist möglich.

Bei dem erfindungsgemäßen Verfahren wird die aufgebrachte Beschichtung, die Korrosionsschutzschicht, nach dem Auftragen und vor dem Aufhaspeln auf dem Halbzeugband, insbesondere durch Wärmezufuhr, getrocknet werden. Typischerweise sind dazu nur einige Sekunden erforderlich. Die Temperatur liegt dabei unterhalb der für Stahl notwendigen Entspannungs- und Rekristallisationsglühtemperaturen. In vorteilhafter Weise wird damit ein temperaturbedingter Einfluss auf Eigenschaftsänderungen bei hochfesten, mehrphasigen umwandlungsfähigen Stahl-Werkstoffen vermieden. Obgleich die Temperatur auch unterhalb von 350 °C liegen kann, beträgt diese bevorzugt weniger als 300 °C und besonders bevorzugt weniger als 250 °C. Die Temperatur beträgt bevorzugt jedoch mehr als 150 °C, um die für die Trocknung der wässrigen oder organischen Lösung benötigte Zeitdauer zu verkürzen.

Es kann des Weiteren optional vorgesehen sein, dass im erfindungsgemäßen Verfahren nach dem Abhaspeln und vor dem Auftragen die zu beschichtende Oberfläche des Halbzeugbandes gereinigt wird. Insbesondere kann die Reinigung mechanisch sein und/oder ein Entfetten oder Entölen umfassen. Die Reinigung erfolgt dabei kontinuierlich.

In vorteilhafter Weise kann im erfindungsgemäßen Verfahren das Beschichten, und insbesondere das Abhaspeln und das Aufhaspeln, kontinuierlich und/oder im Durchlauf durchgeführt werden, so dass ein unterbrechungsfreier oder kontinuierlicher Fertigungsvorgang (in-line Prozess) erreicht wird. Des Weiteren kann in vorteilhafter Weise der Schritt des Aufbringens als zusätzliches Fertigungsmodul in bereits bestehende Prozesslinien, ohne diese anderwärtig zu ändern, integriert werden, so dass bedeutend geringere Investitionskosten für die Prozesserweiterung anfallen, wenn beispielsweise kein zusätzlicher Ofen erforderlich ist.

A priori gibt es für die metallischen Partikel keine Werkstoffeinschränkungen. Das zum Einsatz gelangende Metall der metallischen Partikel kann insbesondere niedrig schmelzend sein. In konkreten Anwendungen können die im erfindungsgemäßen Verfahren aufzubringenden metallischen Partikel, insbesondere auch metallische Nanopartikel, Zinn, Zink, Aluminium, Mangan, Chrom, Nickel, Eisen, Blei, Magnesium, Calcium, Strontium, Barium, Natrium, Kalium, Lithium, Wismut, Indium, Cer, Tellur, Zirkonium, Silber, Titan oder Kupfer in einer Mischung und/oder Legierung oder als Reinstoff enthalten. Die konkrete chemische Zusammensetzung der metallischen Beschichtung ist frei wählbar oder gestaltbar, insbesondere im Hinblick auf die gewünschte Anwendung. Es resultiert eine erhebliche Steigerung der Effizienz des Korrosionsschutzes. Beispiele für Mischstrukturen oder Legierungen sind Zink und Aluminium, Zink und Mangan, Zink und Titan, Messing, Bronze.

Bei einer bevorzugten Ausführungsform des erfindungsgemäßen Verfahrens umfassen die metallischen Partikel eine Mischung aus Aluminium und Zink oder aus Aluminium und Magnesium oder aus Aluminium, Zink und Magnesium.

Hierbei hat es sich in Hinblick auf den Korrosionsschutz und die Haftfähigkeit sowie auch die Umformbarkeit des beschichteten Kaltbandes als besonders vorteilhaft herausgestellt, wenn der Anteil an Aluminium in der Korrosionsschutzschicht im Bereich von 1 bis 40 Gew.-%, bevorzugt 5 bis 20 Gew.-%, der Anteil an Zink im Bereich von 0 bis 90 Gew.-%, bevorzugt 50 bis 80 Gew.-% und der Anteil an Magnesium im Bereich von 0 bis 90 Gew.-%, bevorzugt 50 bis 80 Gew.-% liegt, jeweils bezogen auf das Gesamtgewicht der getrockneten Korrosionsschutzschicht.

Nach einem weiteren, der Erfindung zugrunde liegenden Gedanken sind die metallischen Partikel in der Korrosionsschutzschicht in einer Matrix aus Titandioxid und/oder aus organischen Verbindungen, insbesondere Polyurethanen, Polyestern, Epoxidharzen, Alkydharzen, Phenolharzen, Melaminharzen, Acrylaten, Methacrylaten, organisch-anorganischen Verbindungen, insbesondere Oligo- und Polysiloxanen aus Hydrolyse und Kondensation von Alkylalkoxysilanen bzw. Alkoxysilanen bzw. Mischungen hieraus bzw. Silikonen oder Silikonharzen oder organisch modifizierten Silikonharzen oder rein anorganischen Verbindungen, insbesondere Silikaten, Polyphosphaten, Aluminosilikaten bzw. Metalloxiden enthalten. Diese stellen in der Korrosionsschutzschicht nach dem Trocknen die Bindung zwischen den metallischen Partikeln und der Oberfläche des Kaltbandes her. Ebenso ist es denkbar, dass die metallischen Partikel in der Korrosionsschutzschicht in einer Matrix aus oxydischen Nanopartikeln von Metallen oder Halbmetallen aufgenommen sind, um diese an die Oberfläche des Kaltbandes zu binden.

Als besonders vorteilhaft in Hinblick auf eine gute Bindungswirkung hat es sich gezeigt, wenn die Korrosionsschutzschicht Titanbutylat und/oder Zirkonoxide enthält. Jedoch ist es ebenfalls denkbar, die Bindung zwischen den metallischen Partikeln und der Oberfläche des Kaltbandes durch Indium-Zinnoxid (ITO), Antimon-dotiertes Zinndioxid (ATO), mit Fluoriddotiertem Zinndioxid (FTO) oder durch sonstige leitfähige oder halbleitende Oxide bereitzustellen, welche in der Korrosionsschutzschicht enthalten sind.

Bei der bevorzugten Ausführungsform der Erfindung besitzt das Kaltband eine strukturierte, insbesondere durch eine Walzbearbeitung erhaltene Oberfläche, die eine mittlere Oberflächenrauheit Ra von 0,9 bis 1,5 Mikrometern besitzt. Die Oberflächenstruktur wird bevorzugt dadurch erzeugt, dass das Kaltband vor dem Aufbringen der Korrosionsschutzschicht durch wenigstens einen Walzenspalt geführt wird, dessen Walzen eine strukturierte Oberfläche aufweisen. Von besonderem Vorteil in Hinblick auf eine gute Haftung der Zwischenschicht in Verbindung mit einer guten Umformbarkeit des Kaltbandes ist es in diesem Zusammenhang, wenn die Walzen durch Verchromen nach dem sogenannten PRETEX^{®} -Verfahren mit einer strukturierten Oberfläche versehen werden, da eine solche Oberfläche bei den herzustellenden Bauteilen nach dem Umformprozess kein richtungsabhängiges optisches Erscheinungsbild erzeugt.

Die metallischen Partikel können beispielsweise eine kugelartige Form besitzen, wobei der mittlere Durchmesser der metallischen Partikel im Bereich der mittleren Oberflächenrauheit Ra der Oberfläche des Kaltbandes liegt. Hierdurch erhöht sich die Bindungswirkung zwischen den metallischen Partikeln und der Oberfläche des Kaltbandes in vorteilhafter Weise.

Nach einem weiteren der Erfindung zugrunde liegenden Gedanken besitzen die metallischen Partikel eine abgeflachte, plättchenartige Form, und der Durchmesser der metallischen Partikel ist größer, insbesondere um das 1,5 bis 10-fache größer, als die mittlere Oberflächenrauheit Ra der Oberfläche des Kaltbandes. Hierdurch ergibt sich der Vorteil, dass sich die metallischen Partikel, die in diesem Falle bevorzugt als sogenannte Flakes in der nasschemischen Lösung des Mediums vorliegen, sich nach dem Aufbringen der Lösung in mehreren Lagen übereinander anordnen und nach dem Trocknen eine sehr dünne Korrosionsschutzschicht mit mehreren Partikellagen bilden, die sehr gut an der Oberfläche des Kaltbandes haftet und gleichzeitig eine überraschend gute Umformbarkeit gewährleistet.

Die abgeflachten plättchenartigen metallischen Partikel besitzen eine Dicke von weniger als einem Mikrometer, bevorzugt weniger als 0,5 Mikrometern und weisen einen mittleren Durchmesser im Bereich von 5 bis 20 Mikrometer auf, der bevorzugt 10 bis 15 Mikrometer beträgt. Eine besonders gute Haftung in Verbindung mit einer deutlich verbesserten Umformbarkeit des beschichteten Kaltbandes im Falle von höchsten Qualitätsgüten des Kaltbandes konnten hierbei im Falle der zuvor als bevorzugt erwähnten Rauhigkeiten Ra, Durchmessern und Dicken der Flakes bei Schichtdicken des getrockneten Mediums auf dem Kaltband beobachtet werden, die im Bereich zwischen 1 Mikrometer und 10 Mikrometern, bevorzugt zwischen 3 Mikrometern und 5 Mikrometern, liegen.

Das erfindungsgemäße Verfahren kann auch auf bereits beschichtete Halbzeugbänder angewendet werden, sei es um eine weitere Schicht aufzubringen, sei es partiell um eine Reparatur an der bereits bestehenden Beschichtung vorzunehmen.

Im Zusammenhang mit dem erfindungsgemäßen Verfahren steht auch das beschichtete Metallband, welches durch ein Verfahren mit einzelnen Merkmalen, Merkmalskombinationen oder allen Merkmalen gemäß dieser Darstellung erhältlich ist, insbesondere erhalten worden ist. Das erfindungsgemäße beschichtete Metallband umfasst ein metallisches Kaltband und eine darauf in der zuvor beschriebenen Weise aufgebrachte Korrosionsschutzschicht mit metallischen Partikeln.

Vom erfindungsgemäß beschichteten Metallband können zum Beispiel Teile von Fahrzeugen, insbesondere für Kraftfahrzeuge (wie Karosserieteile oder Motorteile), Teile für Züge oder Luftfahrzeuge, für Wasserfahrzeuge, beispielsweise Schiffe, für Teile von Maschinen, für Teile von Industrieanlagen, für Teile von landwirtschaftlichen Geräten oder im Bauwesen oder im Bergbau verwendete Metallteile gefertigt werden.

Weitere Vorteile und vorteilhafte Ausführungsformen und Weiterbildungen der Erfindung werden anhand der nachfolgenden Beschreibung unter Bezugnahme auf die Figuren dargestellt.

Es zeigt im Einzelnen:
- Figur 1: eine Ausführungsform einer Fertigungsanlage zur Durchführung des erfindungsgemäßen Verfahrens, und
- Figur 2: eine schematische Detaildarstellung des erfindungsgemäßen Verfahrens.

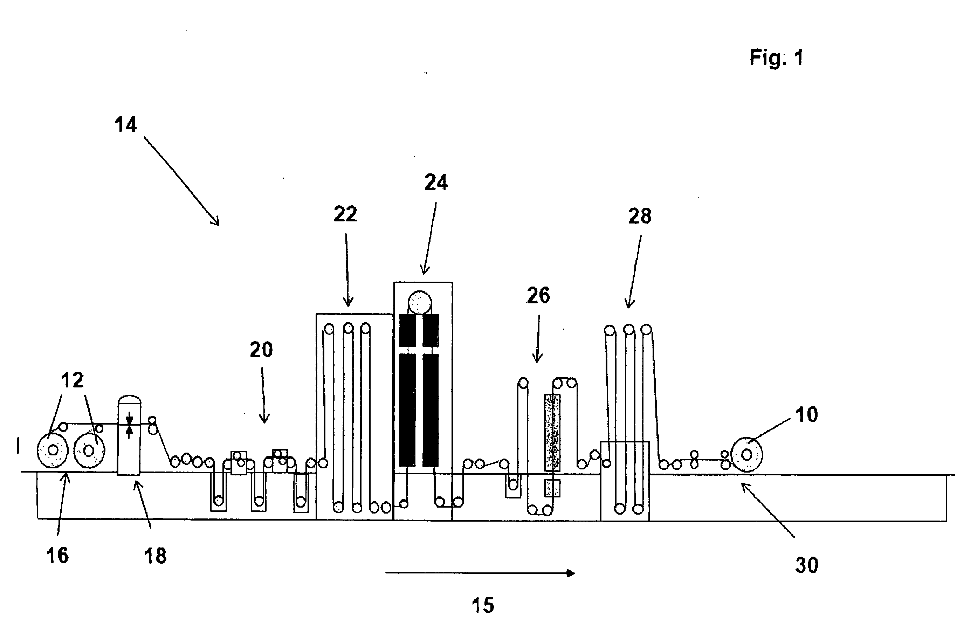

Die Figur 1 zeigt eine Ausführungsform einer Fertigungsanlage 14, die zur Durchführung des erfindungsgemäßen Verfahrens zur Herstellung eines beschichteten Metallbandes 10 geeignet ist. Die Bandlaufrichtung 15 der gezeigten Fertigungsanlage 14 ist durch den Pfeil gekennzeichnet. Ein zu einem Coil aufgewickeltes Halbzeugband in Form eines Kaltbandes 12 wird von wenigstens einer Ablaufhaspel 16 abgewickelt. In dieser Ausführungsform der Fertigungsanlage 14 existieren zwei Ablaufhaspeln 16, so dass die abgewickelten Halbzeugbänder 12 in einer Bandschweißmaschine 18 miteinander verschweißt werden können, um einen kontinuierlichen Betrieb der Fertigungsanlage 14 zu ermöglichen.

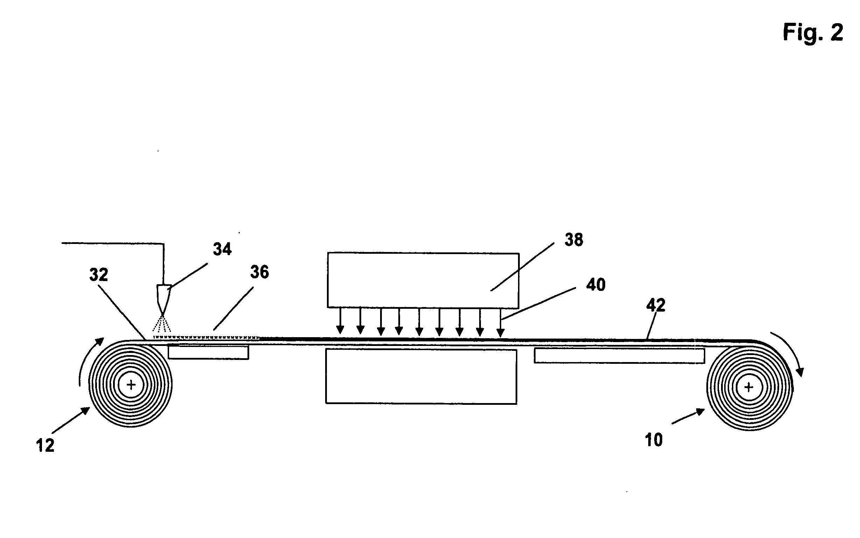

Das abgehaspelte Halbzeugband 12, das zuvor kalt gewalzt und dadurch verfestigt wurde, wird zunächst einer Bandreinigung 20 in mehreren Stufen unterzogen, so dass insbesondere organische Verschmutzungen von der im weiteren Verfahrensablauf zu beschichtenden Oberfläche entfernt werden. Vor den eigentlichen Bearbeitungsabschnitten der Fertigungsanlage 14 wird das Halbzeugband 12 zunächst in einem Einlaufbandspeicher 22 aufgenommen. Von diesem gelangt es in einen Banddurchlaufofen 24 mit Kühlstrecke, in welchem das kalt verfestigte Stahlband 12 entspannungsgeglüht und danach abgekühlt wird. Die erfindungsgemäße Beschichtung erfolgt im Abschnitt Bandbeschichtung 26 mit Reaktor (siehe für Details auch die Figur 2). Anschließend wird das mit der Korrosionsschutzschicht versehene Kaltband in einem Auslaufbandspeicher 28 aufgenommen und gelangt schließlich in eine Aufhaspelgruppe 30, die eine Schopfschere umfasst, so dass einzelne Coils von beschichtetem Kaltband 10 konfektioniert werden können.

Die Figur 2 dient der schematischen Detaildarstellung des erfindungsgemäßen Verfahrens am Beispiel eines zuvor separat wenigstens einmal kalt gewalzten, rekristallisationsgeglühten und anschließend abgekühlten Kaltbands. Das Kaltband 12 wird von einem Coil abgehaspelt. Seine Oberfläche 32 passiert eine Sprühvorrichtung 34, aus der ein flüssiges Medium 36 als nasschemische Lösung mit darin enthaltenen metallischen Partikeln dosiert auf die Oberfläche 32 aufgebracht wird. Das flüssige Medium 36 bildet eine Schicht aus, die sich verfestigt. Die Trocknung wird unterstützt und/oder beschleunigt, indem mittels eines Trockners 38 der Oberfläche 32 Energie in Form von Wärmestrahlung und/oder Heißluft zugeführt wird (Energiezufuhr 40). Auf diese Weise bildet sich auf der Oberfläche 32 des Kaltbandes 12 eine Korrosionsschutzschicht 42 mit metallischen Partikeln aus. Das beschichtete Kaltband 12 wird anschließend wieder zu einem Coil aufgehaspelt und einer nicht gezeigten Umformeinrichtung zugeführt, in welcher das beschichtete Kaltband z.B. durch Tiefziehen in ein Bauteil mit einer gewünschten räumlichen Form überführt wird.

In konkreten Ausführungsformen kann das erfindungsgemäß aufzutragende Medium mit metallischen Partikeln unterschiedliche Zusammensetzungen aufweisen. In einem ersten Beispiel umfasst das Medium Hydrolysate und/oder Kondensate mindestens eines Silans oder eines Silikonharzbindemittels. Zusätzlich kann in diesem ersten Beispiel das Medium ein organisches Lösungsmittel, wie handelsübliche Alkohole, Ester, Ether oder Kohlenwasserstoffe, insbesondere Benzine, enthalten. Ferner kann ein Feststoffschmiermittel zugesetzt sein, beispielsweise Wachs, Stearat, Graphit, Ruß, Molybdändisulfid, Wolframdisulfid, Bornitrid, Aluminiumoxid, Titanoxid oder Glimmer. In einem zweiten Beispiel kann das Medium eine organische Verbindung als Bindemittel enthalten, insbesondere kann es sich um ein Polyurethan, einen Polyester, ein Epoxidharz, ein Alkydharz, ein Phenolharz, ein Melaminharz, ein Acrylat, ein Methacrylat, ein Oligosiloxan oder ein Polysiloxan beziehungsweise Mischungen aus Silikonen oder Silikonharzen handeln. Alternativ dazu können im zweiten Beispiel auch rein anorganische Verbindungen als Bindemittel fungieren, zum Beispiel Polyphosphate, Alumimiumsilikate, Metalle, Metallalkoxide, Metalloxide und Metallsalze. Des Weiteren kann ein Schmiermittel enthalten sein, beispielsweise eines der oben bereits für das erste Beispiel genannten Festkörperschmiermittel, aber auch natürliche oder synthetische Wachse, Öle, Polytetraflourethylen, Fluorethylenpropylen, thermoplastische Polymere, wie Polyethylen, Polyamid, Stearat, Aluminium-, Zink-, Magnesium- oder Lithiumseifen, höhere Fettsäuren, organische Verbindungen von Chlor, Phosphor und Schwefel, Fluoride von Calcium oder Barium, Phosphate, Oxide, Hydroxide und Sulfide von Calcium und Zink sowie Metalle wie Blei, Kupfer, Zinn, Silber, Gold, Indium und Nickel. Ferner kann das Medium im zweiten Beispiel ein oder mehrere Korrosionsschutzpigmente oder Korrosionsinhibitoren umfassen, insbesondere Silikate, Polyphosphate, Tannin-Derivate, basische Sulfonate von Alkali- oder Erdalkalimetallen, Zinksalze, organische Stickstoffsäuren, Phosphate, Chromate, Molybdate von Calcium, Magnesium, Zink oder Aluminium. Die beispielhaft aufgeführten Substanzen für bestimmte Komponenten der zwei aufgeführten Beispiele können auch zu weiteren Beispielen kombiniert werden.

### Bezugszeichenliste

- 10: beschichtetes Metallband/Kaltband
- 12: Halbzeugband
- 14: Fertigungsanlage
- 15: Bandlaufrichtung
- 16: Ablaufhaspel
- 18: Bandschweißsmaschine
- 20: Bandreinigung
- 22: Einlaufbandspeicher
- 24: Banddurchlaufofen
- 26: Bandbeschichtung mit Reaktor
- 28: Auslaufbandspeicher
- 30: Aufhaspelgruppe mit Schopfschere
- 32: Oberfläche des Bandes
- 34: Sprühvorrichtung
- 36: Medium mit metallischen Nanopartikeln
- 38: Trockner
- 40: Energiezufuhr
- 42: Korrosionsschutzschicht

## Patentansprüche

1. Verfahren zur Herstellung eines beschichteten Metallbandes (10) aus einem Halbzeugband (12), in welchem das Halbzeugband (12) von einem Coil abgehaspelt, danach auf das Halbzeugband (12) eine Korrosionsschutzschicht (42) aufgebracht und danach das beschichtete Halbzeugband (12) zu einem Coil aufgehaspelt wird,
**dadurch gekennzeichnet,**
**dass** das Halbzeugband (12) ein durch Kaltwalzen, Abkühlen und Rekristallisationsglühen erhaltenes Kaltband ist, dass ein Medium (36) mit metallischen Partikeln zur Bildung der Korrosionsschutzschicht (42) darauf aufgebracht wird, wobei das Medium (36) eine nasschemische Lösung ist, die durch Sprühen, Tauchen, Spritzen, Fluten oder Walzen aufgebracht wird, und dass die Korrosionsschutzschicht (42) nach dem Auftragen des Mediums und vor dem Aufhaspeln auf dem Kaltband (12) durch Wärmezufuhr bei einer Temperatur getrocknet wird, die unterhalb der Rekristallisationsglühtemperatur des Kaltbandes liegt.

2. Verfahren gemäß Anspruch 1,
**dadurch gekennzeichnet,**
**dass** die Temperatur während des Trocknens unterhalb von 350 Grad Celsius, bevorzugt unterhalb von 300 Grad Celsius, und besonders bevorzugt unterhalb von 250 Grad Celsius, liegt.

3. Verfahren gemäß einem der vorstehenden Ansprüche,
**dadurch gekennzeichnet,**
**dass** nach dem Abhaspeln und vor dem Auftragen die zu beschichtende Oberfläche (32) des Halbzeugbandes (12) gereinigt wird.

4. Verfahren gemäß einem der vorstehenden Ansprüche,
**dadurch gekennzeichnet,**
**dass** das Beschichten kontinuierlich und/oder im Durchlauf durchgeführt wird.

5. Verfahren gemäß einem der vorstehenden Ansprüche,
**dadurch gekennzeichnet,**
**dass** die metallischen Partikel Zinn, Zink, Aluminium, Chrom, Nickel, Blei, Eisen, Magnesium, Calcium, Strontium, Barium, Natrium, Kalium, Lithium, Wismut, Indium, Cer, Tellur, Zirkonium, Silber, Titan oder Kupfer in einer Mischung und/oder Legierung oder als Reinstoff enthalten.

6. Verfahren nach Anspruch 5,
**dadurch gekennzeichnet,**
**dass** die metallischen Partikel eine Mischung aus Aluminium und Zink oder aus Aluminium und Magnesium oder aus Aluminium, Zink und Magnesium umfassen.

7. Verfahren nach Anspruch 6,
**dadurch gekennzeichnet,**
**dass** der Anteil an Aluminium in der Korrosionsschutzschicht 1 bis 40 Gew.-%, bevorzugt 5 bis 20 Gew.-%, und der Anteil an Zink 0 bis 90 Gew.-%, bevorzugt 50 bis 80 Gew.-%, und der Anteil an Magnesium 0 bis 90 Gew.-%, bevorzugt 50 bis 80 Gew.-% beträgt, jeweils bezogen auf das Gesamtgewicht der Korrosionsschutzschicht.

8. Verfahren nach einem der Ansprüche 6 oder 7,
**dadurch gekennzeichnet,**
**dass** die metallischen Partikel in der Korrosionsschutzschicht (42) in einer Matrix aus oxidischen Nanopartikeln von Metallen oder Halbmetallen enthalten sind.

9. Verfahren nach einem der Ansprüche 6 oder 7,
**dadurch gekennzeichnet,**
**dass** die metallischen Partikel in der Korrosionsschutzschicht (42) in einer Matrix aus Titandioxid und/oder aus organischen Verbindungen, insbesondere Polyurethanen, Polyestern, Epoxidharzen, Alkydharzen, Phenolharzen, Melaminharzen, Acrylaten, Methacrylaten, organisch-anorganischen Verbindungen, insbesondere Oligo- und Polysiloxanen aus Hydrolyse und Kondensation von Alkylalkoxysilanen bzw. Alkoxysilanen bzw. Mischungen hieraus bzw. Silikonen oder Silikonharzen oder organisch modifizierten Silikonharzen oder rein anorganischen Verbindungen, insbesondere Silikaten, Polyphosphaten, Aluminosilikaten bzw. Metalloxiden enthalten sind.

10. Verfahren nach einem der vorhergehenden Ansprüche,
**dadurch gekennzeichnet,**
**dass** das Kaltband eine strukturierte, insbesondere durch eine Walzbearbeitung erhaltene Oberfläche besitzt, und dass die mittlere Oberflächenrauheit Ra der Oberfläche des Kaltbandes vor dem Aufbringen des Mediums (36) vorzugsweise im Bereich zwischen 0,9 und 1,5 Mikrometern liegt.

11. Verfahren nach einem der vorhergehenden Ansprüche,
**dadurch gekennzeichnet,**
**dass** die metallischen Partikel eine kugelartige Form besitzen, und dass der mittlere Durchmesser der metallischen Partikel im Bereich der mittleren Oberflächenrauheit Ra der Oberfläche des Kaltbandes liegt.

12. Verfahren nach einem der Ansprüche 1 bis 10,
**dadurch gekennzeichnet,**
**dass** die metallischen Partikel eine abgeflachte, plättchenartige Form besitzen, und dass der Durchmesser der metallischen Partikel größer, insbesondere um das 1,5 bis 10-fache größer ist, als die mittlere Oberflächenrauheit Ra der Oberfläche des Kaltbandes.

13. Verfahren nach Anspruch 12,
**dadurch gekennzeichnet,**
**dass** die abgeflachten plättchenartigen metallischen Partikel eine Dicke von weniger als 1 Mikrometer, bevorzugt weniger als 0,5 Mikrometer, und einen mittleren Durchmesser im Bereich von 5 bis 20 Mikrometern, bevorzugt 10 bis 15 Mikrometern, besitzen.

14. Verfahren nach einem der vorhergehenden Ansprüche,
**dadurch gekennzeichnet,**
**dass** die Schichtdicke des getrockneten Mediums (36) auf dem Kaltband abschnittsweise im Wesentlichen konstant ist und im Bereich zwischen 1 Mikrometer und 10 Mikrometern, bevorzugt zwischen 3 Mikrometern und 5 Mikrometern, liegt.

15. Beschichtetes Metallband (10) erhältlich durch ein Verfahren gemäß einem der vorstehenden Ansprüche, umfassend ein metallisches Halbzeugband (12) und eine darauf angebrachte Korrosionsschutzschicht (42) mit metallischen Partikeln, insbesondere Nanopartikeln.

16. Verwendung eines beschichteten Metallbandes (10) gemäß Anspruch 15 für Teile von Fahrzeugen, für Teile von Maschinen, für Teile von Industrieanlagen, für Teile von landwirtschaftlichen Geräten, für Teile im Bauwesen oder für Teile im Bergbau.

## Claims

1. A process for producing a coated metal strip (10) from a semifinished strip (12) in which the semifinished strip (12) is wound off from a coil, a corrosion protection layer (42) is then applied to the semifinished strip (12) and the coated semifinished strip (12) is then wound up to form a coil,
**characterized in that**
the semifinished strip (12) is a cold-rolled strip which is obtained by cold rolling, cooling and recrystallization annealing and to which a medium (36) having metallic particles has been applied to form the corrosion protection layer (42), where the medium (36) is a wet-chemical solution which is applied by spraying, dipping, squirting, flooding or rolling, and **in that** the corrosion protection layer (42) is dried on the cold-rolled strip (12) by supply of heat at a temperature which is below the recrystallization annealing temperature of the cold-rolled strip after application of the medium and before rolling up.

2. The process as claimed in claim 1,
**characterized in that**
the temperature during drying is below 350 degrees Celsius, preferably below 300 degrees Celsius and particularly preferably below 250 degrees Celsius.

3. The process as claimed in either of the preceding claims,
**characterized in that**
the surface (32) of the semifinished strip (12) to be coated is cleaned after winding-off and before application of the medium.

4. The process as claimed in any of the preceding claims,
**characterized in that**
coating is carried out continuously and/or with ongoing movement of the strip.

5. The process as claimed in any of the preceding claims,
**characterized in that**
the metallic particles contain tin, zinc, aluminum, chromium, nickel, lead, iron, magnesium, calcium, strontium, barium, sodium, potassium, lithium, bismuth, indium, cerium, tellurium, zirconium, silver, titanium or copper in a mixture and/or alloy or as pure material.

6. The process as claimed in claim 5,
**characterized in that**
the metallic particles comprise a mixture of aluminum and zinc or aluminum and magnesium or aluminum, zinc and magnesium.

7. The process as claimed in claim 6,
**characterized in that**
the proportion of aluminum in the corrosion protection layer is from 1 to 40% by weight, preferably from 5 to 20% by weight, and the proportion of zinc is from 20 to 90% by weight, preferably from 50 to 80% by weight, and the proportion of magnesium is from 0 to 90% by weight, preferably from 50 to 80% by weight, in each case based on the total weight of the corrosion protection layer.

8. The process as claimed in either claim 6 or 7,
**characterized in that**
the metallic particles in the corrosion protection layer (42) are present in a matrix of oxidic nanoparticles of metals or semimetals.

9. The process as claimed in either claim 6 or 7,
**characterized in that**
the metallic particles in the corrosion protection layer (42) are present in a matrix of titanium dioxide and/or of organic compounds, in particular polyurethane, polyesters, epoxy resins, alkyd resins, phenolic resins, melamine resins, acrylates, methacrylates, organic-inorganic compounds, in particular oligosiloxanes and polysiloxanes from hydrolysis and condensation of alkylalkoxysilanes or alkoxysilanes or mixtures thereof or silicones or silicone resins or organically modified silicone resins, or purely inorganic compound, in particular silicates, polyphosphates, aluminosilicates or metal oxides.

10. The process as claimed in any of the preceding claims,
**characterized in that**
the cold-rolled strip has a structured surface, in particular a surface obtained by rolling, and **in that** the average surface roughness Ra of the surface of the cold-rolled strip before application of the medium (36) is preferably in the range from 0.9 to 1.5 microns.

11. The process has claimed in any of the preceding claims,
**characterized in that**
the metallic particles have a spherical shape and **in that** the average diameter of the metallic particles is in the region of the average surface roughness Ra of the surface of the cold-rolled strip.

12. The process as claimed in any of claims 1 to 10,
**characterized in that**
the metallic particles have a flattened, platelet-like shape and **in that** the diameter of the metallic particles is greater, in particular from 1.5 to 10 times greater, than the average surface roughness Ra of the surface of the cold-rolled strip.

13. The process as claimed in claim 12,
**characterized in that**
the flattened platelet-like metallic particles have a thickness of less than 1 micron, preferably less than 0.5 micron, and an average diameter in the range from 5 to 20 microns, preferably from 10 to 15 microns.

14. The process as claimed in any of the preceding claims,
**characterized in that**
the layer thickness of the dried medium (36) on the cold-rolled strip is essentially constant in sections and is in the range from 1 micron to 10 microns, preferably from 3 microns to 5 microns.

15. A coated metal strip (10) which can be obtained by a process as claimed in any of the preceding claims, which comprises a metallic semi-finished strip (12) and a corrosion protection layer (42) containing metallic particles, in particular nanoparticles, which has been applied thereto.

16. The use of a coated metal strip (10) as claimed in claim 15 for parts of vehicles, for parts of machines, for parts of industrial plants, for parts of agricultural appliances, for parts in building and construction or for parts in mining.

## Revendications

1. Procédé pour la production d'une bande métallique revêtue (10) à partir d'une bande (12) sous forme de produit semi-fini, dans lequel on déroule d'une bobine la bande (12) sous forme de produit semi-fini, on applique ensuite une couche de protection contre la corrosion (42) sur la bande (12) sous forme de produit semi-fini et on enroule ensuite la bande revêtue (12) sous forme de produit semi-fini pour obtenir une bobine, **caractérisé en ce que** la bande (12) sous forme de produit semi-fini est une bande froide que l'on obtient par laminage à froid, refroidissement et recuit de recristallisation ; **en ce qu'**on applique par-dessus un milieu (36) comprenant des particules métalliques pour la formation de la couche de protection contre la corrosion (42), le milieu (36) représentant une solution pour un procédé chimique par voie humide, que l'on applique par projection, par immersion, par pulvérisation, par noyage ou par laminage ; et **en ce que**, après l'application du milieu et avant le bobinage, on sèche la couche de protection contre la corrosion (42) sur la bande froide (12) par apport de chaleur à une température qui est inférieure à la température de recuit de recristallisation de la bande froide.

2. Procédé selon la revendication 1, **caractérisé en ce que** la température, lors du séchage, est inférieure à 350°C de préférence inférieure à 300°C et de manière particulièrement préférée inférieure à 250°C.

3. Procédé selon l'une quelconque des revendications précédentes, **caractérisé en ce que**, après le déroulement et avant l'application, on purifie la surface à revêtir (32) de la bande (12) sous forme de produit semi-fini.

4. Procédé selon l'une quelconque des revendications précédentes, **caractérisé en ce que** le revêtement est mis en oeuvre en continu et/ou par passage.

5. Procédé selon l'une quelconque des revendications précédentes, **caractérisé en ce que** les particules métalliques contiennent de l'étain, du zinc, de l'aluminium, du chrome, du nickel, du plomb, du fer, du magnésium, du calcium, du strontium, du baryum, du sodium, du potassium, du lithium, du bismuth, de l'indium, du cérium, du tellure, du zirconium, de l'argent, du titane ou du cuivre sous la forme d'un mélange et/ou d'un alliage ou sous la forme d'une substance pure.

6. Procédé selon la revendication 5, **caractérisé en ce que** les particules métalliques comprennent un mélange d'aluminium et de zinc ou d'aluminium et de magnésium ou d'aluminium, de zinc et de magnésium.

7. Procédé selon la revendication 6, **caractérisé en ce que** la fraction d'aluminium dans la couche de protection contre la corrosion s'élève de 1 à 40 % en poids, de préférence de 5 à 20 % en poids et la fraction de zinc s'élève de 0 à 90 % en poids, de préférence de 50 à 80 % en poids et la fraction de magnésium s'élève de 0 à 90 % en poids, de préférence de 50 à 80 % en poids, chaque fois rapportés au poids total de la couche de protection contre la corrosion.

8. Procédé selon l'une quelconque des revendications 6 ou 7, **caractérisé en ce que** les particules métalliques dans la couche de protection contre la corrosion (42) sont contenues dans une matrice constituée par des nanoparticules oxydées de métaux ou de semi-métaux.

9. Procédé selon l'une quelconque des revendications 6 ou 7, **caractérisé en ce que** les particules métalliques dans la couche de protection contre la corrosion (42) sont contenues dans une matrice constituée par du dioxyde de titane et/ou par des composés organiques, en particulier des polyuréthanes, des polyesters, des résines époxydes, des résines alkydes, des résines phénoliques, des résines de mélamine, des acrylates, des méthacrylates, des composés organiques-inorganiques en particulier des oligosiloxanes et des polysiloxanes que l'on obtient à partir d'une hydrolyse et d'une condensation d'alkylalcoxysilanes, respectivement d'alcoxysilanes, respectivement de mélanges de ces derniers, respectivement de silicones ou de résines de silicone ou de résines de silicone modifiées par des composés organiques ou bien de composés purement inorganiques, en particulier des silicates, des polyphosphates, des aluminosilicates, respectivement des oxydes métalliques.

10. Procédé selon l'une quelconque des revendications précédentes, **caractérisé en ce que** la bande froide possède une surface structurée, que l'on obtient en particulier via un traitement par laminage, et **en ce que** la rugosité superficielle moyenne Ra de la surface de la bande froide, avant l'application du milieu (36), se situe de préférence dans la plage entre 0,9 et 1,5 µm.

11. Procédé selon l'une quelconque des revendications précédentes, **caractérisé en ce que** les particules métalliques possèdent une forme sphérique, et **en ce que** le diamètre moyen des particules métalliques se situe dans la plage de la rugosité superficielle moyenne Ra de la surface de la bande froide.

12. Procédé selon l'une quelconque des revendications 1 à 10, **caractérisé en ce que** les particules métalliques possèdent une forme aplatie, analogue à des plaquettes, et **en ce que** le diamètre des particules métalliques est supérieur, en particulier supérieur de 1,5 - 10 fois à la rugosité superficielle moyenne Ra de la surface de la bande froide.

13. Procédé selon la revendication 12, **caractérisé en ce que** les particules métalliques de forme aplatie, analogue à des plaquettes possèdent une épaisseur inférieure à 1 µm, de préférence inférieure à 0,5 µm, et un diamètre moyen dans la plage de 5 à 20 µm, de préférence de 10 à 15 µm.

14. Procédé selon l'une quelconque des revendications précédentes, **caractérisé en ce que** l'épaisseur de couche du milieu séché (36) sur la bande froide est essentiellement constante par sections et se situe dans la plage entre 1 µm et 10 µm, de préférence entre 3 µm et 5 µm.

15. Bande métallique revêtue (10) que l'on obtient via un procédé selon l'une quelconque des revendications précédentes, comprenant une bande (12) sous forme de produit semi-fini et une couche de protection contre la corrosion (42) appliquée par-dessus, comprenant des particules métalliques, en particulier des nanoparticules.

16. Utilisation d'une bande métallique revêtue (10) selon la revendication 15 pour des pièces de véhicules automobiles, pour des pièces de machines, pour des pièces d'installations industrielles, pour des pièces d'outillages agricoles, pour des pièces dans le domaine de la construction ou pour des pièces dans le secteur minier.
